# EUROPEAN PATENT APPLICATION

(11) **EP 2 743 798 A1**
(43) Date of publication of application: **18.06.2014**
(21) Application number: 12197084.2
(22) Date of filing: 13.12.2012
(51) Int. Cl.: G06F 3/01, G06F 3/046, G06F 3/0354

(54) **Magnetically coupling stylus and host electronic device**

(71) Applicant: BlackBerry Limited, Waterloo, ON N2K 0A7 (CA)
(72) Inventor: Idzik, Jacek S., Waterloo, Ontario N2L 3W8 (CA); Mercea, Cornel, Waterloo, Ontario N2L 3W8 (CA); Singh, Amit Pal, Waterloo, Ontario N2L 3W8 (CA)
(74) Representative: Roberts, Gwilym Vaughan

(57) **Abstract**

Magnetic coupling between a stylus 102 and a host electronic device 110 is provided using an array 408 of magnetic field generators 106 that produce a magnetic field in proximity to a drawing surface 108 of the host electronic device 110. The magnetic field produces a force on a magnetic tip 112 of the stylus 102. The magnetic field may be controlled dependent upon the location, motion, tilt angle and/or contact force of the stylus 102 and may also be controlled dependent upon images rendered on a display screen that is combined with the drawing surface 108. The magnetic field may also cause motion in a movable magnet 302 of the stylus. The energy associated with the motion may be harvested to provide power to the stylus 102.

## Description

### BACKGROUND

Stylus pointing devices enable information to be input to a host electronic device, such as a smart-phone or a tablet computer. When the tip of a stylus is placed in close proximity to a sensing display surface of the host device, the position of the tip may be determined by the host by a variety of methods, including the effect of the stylus on the electrical properties of the tablet (i.e., via electromagnetic induction, changes in electrical resistance, electrical capacitance, and the like); the optical properties of the tablet; or by ultrasonic positioning.

Various attempts have been made to make writing on a display of an electronic device feel more like writing with a pen on paper. In particular, when writing with a pen, there is friction between the pen and paper that is sensed by the user. This may be contrasted with writing with a stylus on the display of an electronic device where there is very little friction sensed by the user, especially when the tip of the stylus is a ball-point tip that enables the user to also write on paper. The presence of friction provides feedback to the user that facilitates better control of the pen or stylus by the user.

One attempt to introduce friction replaces the tip of the stylus with a dedicated tip such as hard plastic and increases the friction between the tip and the surface of the screen. A further attempt coats the surface of the screen with a special layer having known friction properties.

A stylus may be employed to control a virtual drawing tool such as pen, pencil, paint brush, chalk or air brush, for example, as well as other virtual tools, such as erasers. Physical drawing tools that correspond to these virtual drawing tools may each have different friction properties that cannot be modeled using a screen coating or a single modified stylus tip.

It would therefore be useful for a stylus and host electronic device to mimic the physical characteristics of physical drawing tools.

### BRIEF DESCRIPTION OF THE DRAWINGS

Exemplary embodiments of the present disclosure will be described below with reference to the included drawings such that like reference numerals refer to like elements and in which:

**FIG. 1** is a block diagram of a system for providing magnetic coupling between a stylus and a host electronic device, in accordance with exemplary embodiments of the present disclosure;

**FIG. 2** is a diagram of a stylus, in accordance with some illustrative embodiments of the present disclosure;

**FIG. 3** is a diagrammatic representation of the tip end of a stylus, in accordance with an exemplary embodiment of the disclosure;

**FIG. 4** is a block diagram of a stylus and host electronic device, in accordance with exemplary embodiments of the present disclosure;

**FIG. 5** is a block diagram depicting production of a magnetic coupling between a stylus and a host electronic device, in accordance with some exemplary embodiments of the present disclosure;

**FIG. 6** is a diagrammatic representation of a stylus moving over an array of magnetic field generators, in accordance with some illustrative embodiments of the present disclosure;

**FIG. 7** is a flow chart of a method for generating a magnetic coupling between a stylus and a host electronic device, in accordance with some illustrative embodiments of the present disclosure; and

**FIG. 8** is a flow chart of a method for powering a stylus, in accordance with some exemplary embodiments of the disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

One aspect of the present disclosure relates to an electronic device, such as smart-phone or tablet computer for example, configured to produce a force on a magnetic tip of a stylus. The electronic device includes a drawing surface and a number of magnetic field generators that produce a magnetic field in proximity to the drawing surface. The magnetic field generators may be electric coils embedded in the drawing surface, for example. Operational logic, such as a processor, controls the magnetic field produced by the magnetic field generators in response to the location, motion, orientation and/or contact force of the stylus. The drawing surface may be integrated with a display of the electronic device.

The magnetic field acts on a magnetic element in the tip of the stylus to produce a force on the tip. This force may have a component in the plane of the drawings surface that can be controlled to simulate friction between the stylus and the drawing surface, for example. The force may have a component perpendicular to the plane of the drawing surface that may be employed to simulate undulations or unevenness of the drawing surface or to provide feedback to a user.

The stylus has a tip end for interacting with the drawing surface of the host electronic device. A magnetic element, such as permanent magnet or electromagnet, is located at the tip end of the stylus.

The stylus may also include an energy harvester, such as a magnet that is driven by the magnetic field of the host electronic device to move within an electric coil.

The host electronic device may be controlled by a program of computer-executable instructions. These instructions may be stored on a non-transitory computer-readable medium. When executed, the processor controls the magnetic field generators to produce a magnetic field in proximity to a drawing surface in response to a sensed location of a stylus and/or sensed motion of the stylus. The magnetic field acts on a magnetic tip of the stylus and results in a force on a magnetic tip of the stylus. The force on the magnetic tip of the stylus may be controlled to have a component parallel with the drawing surface to enable simulation of a friction force on the stylus. Also the force on the magnetic tip of the stylus may be controlled to have a component perpendicular to the drawing surface to enable simulation of surface height variation or to provide feedback to a user.

The computer-executable instructions may also provide a computer drawing application having a number of virtual drawing tools such as a pen, pencil, paint brush, chalk or air brush, for example, as well as other tools, such as erasers. The corresponding physical drawing tools have different friction properties. The processor may control magnetic field generators to produce a force on the tip of the stylus that simulates properties, such as friction, of the physical drawing tool corresponding to a selected virtual drawing tool.

Accordingly, friction is simulated using the magnetic field interaction between a stylus containing a magnetic element such as a ferrous element, a permanent magnet or an electromagnet. The magnetic field may be generated by a set of controllable coils located under the screen of the host electronic device. Since the active stylus and the coils are magnetically coupled, driving the coils dependent upon the position, motion, and/or orientation of the stylus generates a force feedback that is felt by the user. The force feedback may be selected according to which virtual drawing tool is selected (pen, paint brush, carioca pens, etc), even when the stylus is close to but not touching the drawing surface (i.e. in a hover mode).

For example, when using an emulated-paint brush, the force sensed in the stylus changes according to speed, tilt angle, type of paint brush selected and paint brushing on wet paint (a physical paint brush advances more slowly in the respective area). When using an emulated-pen, the force depends on the speed and if crossing a previous trace (which feels like a dent). The magnetic field is controlled in such a way that the resulting interaction with the stylus is similar to using a physical paint brush, pen or and other utensils.

A user's experience can be improved still further when the hover distance is known, with smaller distances to the screen resulting in more force applied to the stylus when a paint brush drawing tool is selected.

In one illustrative embodiment, when a user selects a paint brush from the virtual tool box, the host displays the paint brush on the screen as it would have been viewed by the user in the case of using the paint brush on the paper. The closer the tip of the stylus is to the screen, the bigger the paint brush appears to the user on the display. The displayed paint brush is rendered in response to the direction in which the stylus is tilted.

In a further embodiment of the disclosure, a permanent magnet inside the tip of the stylus is configured to allow movement inside a coil. The permanent magnetic may be attached to the body of the stylus with springs, such as coil springs, for example. As a user moves the stylus across the drawing surface or screen, motion of the permanent magnetic is produced by interaction with the magnetic field of the host electronic device. This motion generates a current in the stylus coil that can be harvested to provide power to the stylus. The harvested energy results from the stylus movement (made by the user) and from the interaction with the coil array in the host side.

In a still further embodiment, the coils of the host electronic device may be employed to generate a magnetic field and to sense the presence of the stylus. In this embodiment, the coils act as both sensors and generators at the same time. For example, the coils may sense high frequency (KHz range) electromagnetic fields at the same time as generating low frequency (Hz range) polarized fields to simulate a resistance force on the stylus.

In yet another exemplary embodiment, the host electronic device may control the force on the stylus to transfer information to the user. This may be useful, for example, for visually impaired users. The stylus can indicate direction, form characters on the screen (numbers/letters), etc.

In a still further embodiment, the host electronic device is programmed to provide feedback to the user, through the stylus, when moving over the icons displayed in a graphical user interface or a menu, when moving or dragging icons, or when playing interactive games. For example, when dragging an icon (by pressing the "grabbing button" on the stylus, for example), a virtual disconnection from the screen may be simulated by breaking the magnetic connection between the stylus and the screen once the active stylus pulls the icon from its original place. This mimics a physical separation. Further, when the icon is dropped in the desired location (such as a Recycle Bin, other folder or new desktop position) the active stylus may interact with the surrounding icons just before the icon is released. Once the icon is released (by releasing the "grabbing button", for example) the active stylus may be repelled for a very short period of time to indicate that the icon has been dropped.

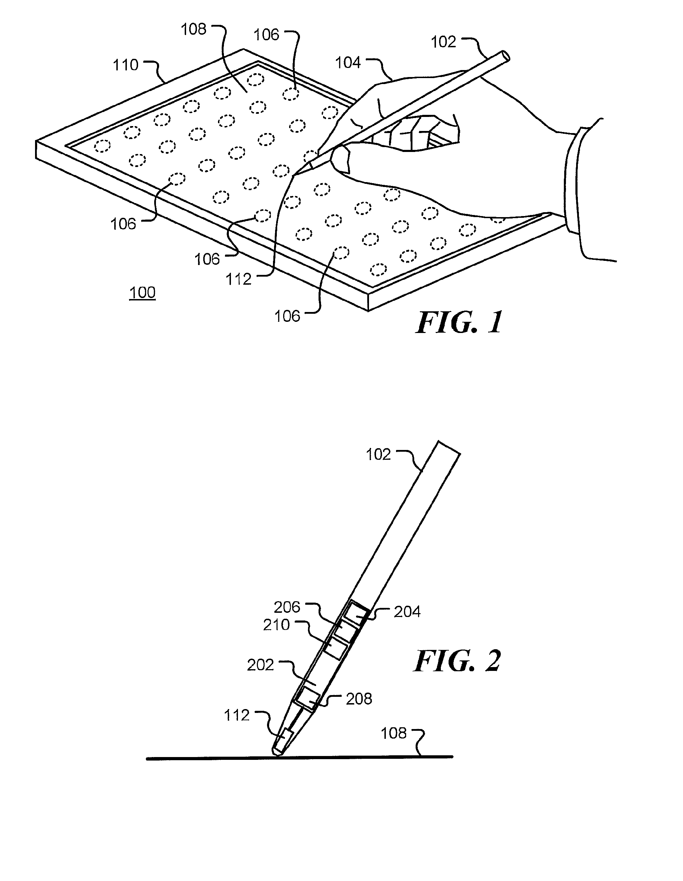

An exemplary embodiment in accordance with various aspects of the present disclosure is shown in **FIG**. **1****.** In **FIG. 1****,** the system 100 includes a stylus 102, operated by a user 104, which interacts with a combined drawing surface 108 of a host electronic device 110. In this embodiment, the drawing surface 108 is combined with a display screen. The host electronic device 110 may be a smart-phone, personal digital assistant (PDA), portable computer, tablet computer or any device utilizing a graphical user interface, for example. Magnetic field generators 106 are located in close proximity of the screen 108 and are employed to generate a magnetic field that interacts with a magnetic tip 112 of the stylus 102. The magnetic field generators 106 may utilize electric coils, for example.

Two or more magnetic field generators 106 may be employed and may be configured in an array pattern, as depicted in **FIG. 1****.** In one exemplary embodiment, a rectangular array of coils is used. A large number of closely spaced magnetic field generators may be used.

In addition to generating the magnetic field, the generators 106 may also be operated as sensors to sense a magnetic field generated by the stylus 102 and thereby determine the location of the stylus with respect to the drawing surface 108.

**FIG. 2** is a diagram of a stylus 102, in accordance with some embodiments of the present disclosure. The stylus 102 includes a magnetic tip 112, such as a ferrous element, an electro-magnet or a permanent magnet. When an electro-magnet is used, comprising a coil and a ferrous core, a control circuit 202 is operable to couple an electric current to the coil. The control circuit 202 also includes a power supply 204, such as a battery. The magnetic tip 112 may also be employed an energy harvester, as will be described below, in which case a power harvesting circuit 206 is provided, driven by the current induced in the coil in response to motion of its ferrous core. One or more sensors 208 are provided. The sensors 208 may include a force sensor that senses the force applied to the tip of the stylus when the tip is in contact with the drawing surface 108 of the electronic device. The sensors 208 may also include motion and tilt sensors. The magnetic field generated by magnetic tip 112 may be sensed by coils in the host electronic device and employed to locate the tip of the stylus with respect to the drawing surface 108. A communication module 210 may be provided to communicate sensor signals or other signals to a host electronic device.

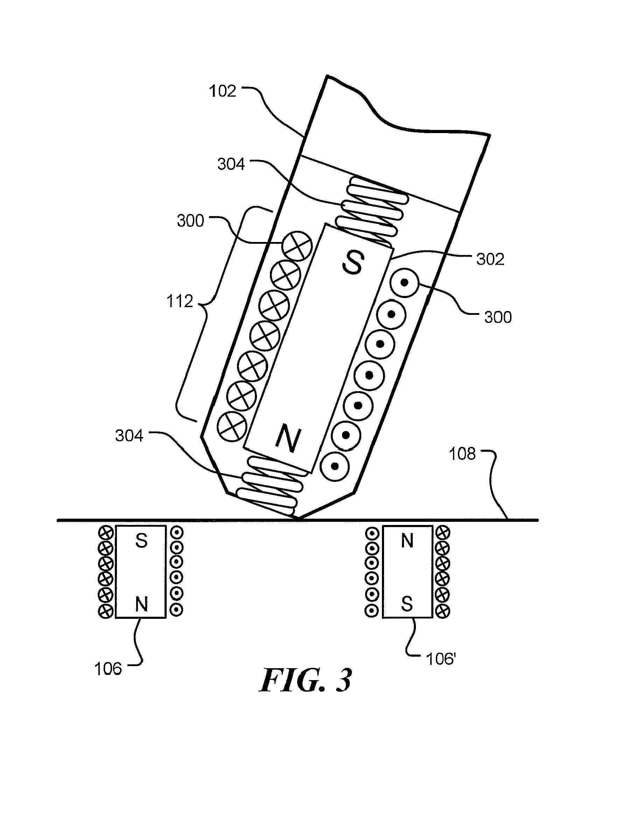

**FIG. 3** is a diagrammatic representation of the tip end of a stylus 102, in accordance with an embodiment of the disclosure. The stylus has a magnetic tip 112. In this embodiment, the magnetic tip 112 comprises a cylindrically wound coil 300 with a ferrous core 302. The ferrous core has a much higher magnetic permeability than air and strengthens the magnetic field. When an electric current is passed through the coil 300, an electromagnetic field is generated. In accordance with known conventions, the crosses on the coil 112 indicate current flow into the page, while the dots indicate current flow out of the page. The ferrous core 302 acts a magnet with its north pole (N) closest to the drawing surface 108.

In the illustrative embodiment depicted, the tip of the stylus 102 is in contact with the surface of a drawing surface 108 on an electronic device. The drawing surface 108 may be integrated with a display screen. Two magnetic filed generators, 106 and 106', are located in proximity to the drawing surface 108 and are operable to produce a magnetic field. As shown, the magnetic field generators 106 and 106' are electromagnets. The electric currents to the magnetic field generators are controlled such the electromagnet 106 is polarized with its south pole closest to the drawing surface 108, while the electromagnet 106' is polarized with its north pole closest to the drawing surface 108. Thus, the magnetic tip 112 of the stylus is attracted to the electromagnet 106 but repelled by the electromagnet 106'. This results in a force being applied to the magnetic tip 112 of the stylus 102. This force may be controlled by a processor in response to a sensed stylus position. For example, if the stylus is moving from left to right and passes electromagnet 106', the polarity of the electromagnet 106' may be reversed so that the force on the stylus is maintained opposite to the direction of motion of the stylus.

In an exemplary embodiment, the strengths and polarities of the electromagnet field generators are controlled such the force on the stylus is opposed the motion of the stylus and is proportional to the velocity of the stylus so as to simulate a friction force.

In a further embodiment, the ferrous core 302 is a permanent magnetic supported in the body of the stylus 102 by spring elements 304 (depicted as coil springs here, although other types of springs may be employed). When the stylus tip is above electromagnet 106, the permanent magnet 302 is attracted towards the drawing surface 108 and the permanent magnet moves axially in the stylus towards the drawing surface 108. When the stylus tip is above electromagnet 106', the permanent magnet 302 is repelled from the drawing surface 108 and the permanent magnet moves axially in the stylus away from the drawing surface 108. If the electromagnetic field generators have alternating polarities, either spatially or temporally, or both, the permanent magnet 302 oscillates and induces a current in the coil 300. This current may be used to drive an energy harvesting circuit. Power from the energy harvesting circuit may be used to power the stylus.

The frequency of the temporally alternating polarity of the electromagnets may be selected to coincide with a mechanical resonance frequency of the movable magnet on the spring elements.

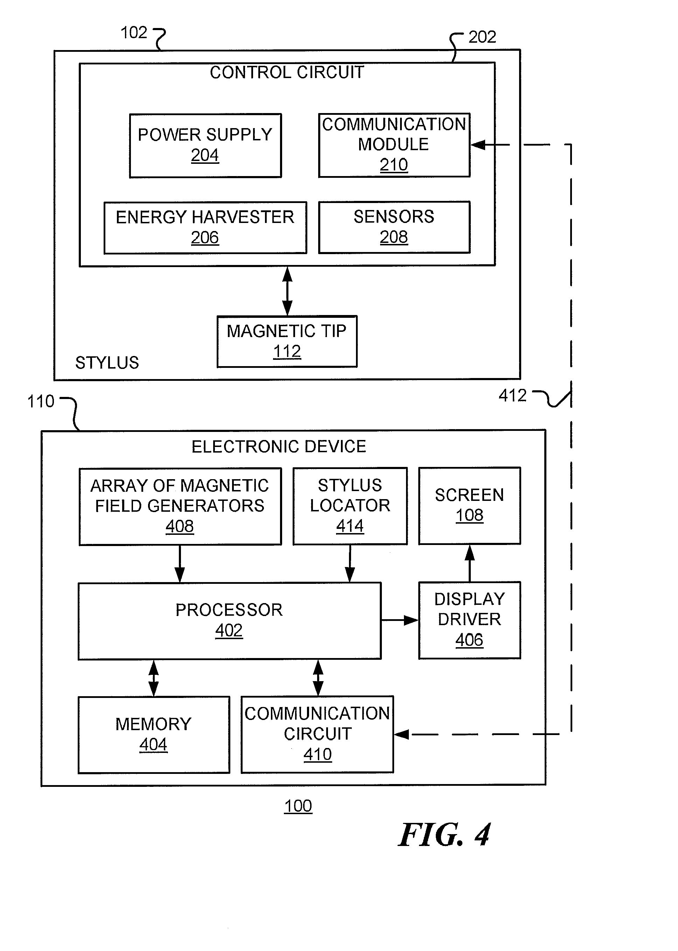

**FIG. 4** is a block diagram of a system 100 comprising a stylus 102 and host electronic device 110, in accordance with exemplary embodiments of the present disclosure. The host electronic device 110 includes a processor 402 coupled to a memory 404. The processor 402 may be any form of operational logic, such as a programmed processor, an application specific integrated circuit (ASIC), a field programmable gate array (FPGA) or other device. The processor 402 is also coupled to a display driver 406 that is configured to render images on a combination drawing surface and screen 108. The memory 404 may be employed to store an operating system and various user applications that may be executed on the processor 402. The operating system and user applications control the processor to display elements of a graphical user interface on the screen of element 108. The stylus 102 may be employed to interact with the displayed graphical user interface to provide input to the operating system or other user applications executed on the processor 402.

As discussed above, the stylus 102 has a magnetic tip 112, such as a ferrous element, an electromagnet or a permanent magnet. In this embodiment, the magnetic tip 112 is controlled by control circuit 202 of the stylus. In particular, the control circuit may be employed to switch an electric current to the magnetic field generator 112 or to harvest energy from a moving element of the tip. The control circuit also includes a power supply 204, such as a battery, and an energy harvester 206 that harvests energy from a moving magnet in the magnetic tip 112. The power supply 204 may be a rechargeable battery that is recharged using harvested energy. Sensors 208 may include a tip force sensor, a tilt sensor, an accelerometer, and/or a gyroscope for example. Signals from the one or more sensors 208 are passed to a communication module 210 and may be communicated to a corresponding communication circuit 410 of the host electronic device 110 over a wireless link 412. The received sensor signals may be used by the host electronic device 110 to determine the drive signals for the magnetic field generators 408. Additionally, the drive signals are dependent upon the location of the stylus, as sensed by a stylus locator 414.

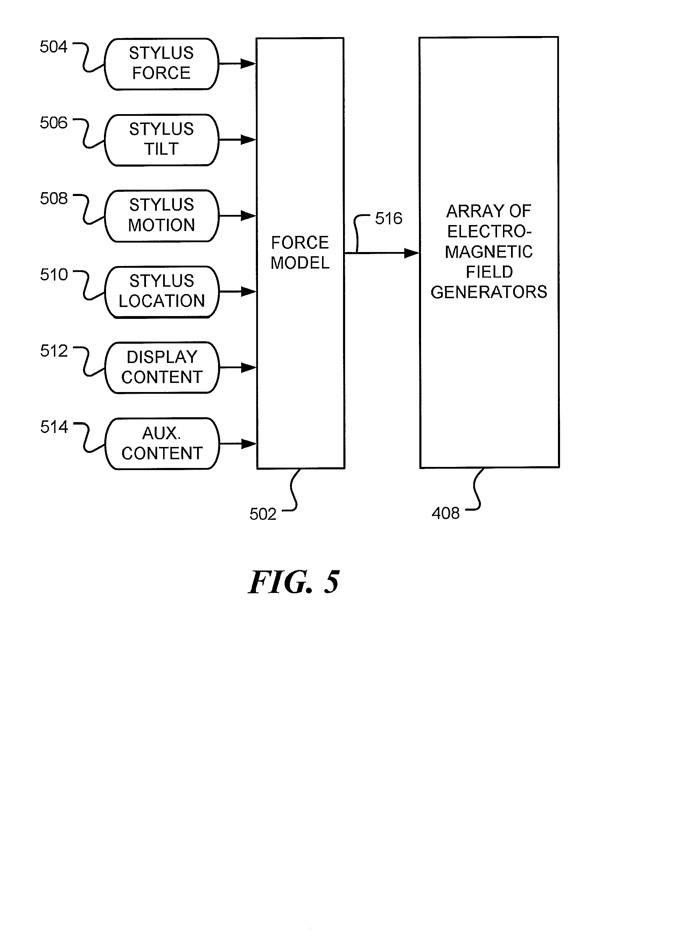

**FIG. 5** is a block diagram depicting production of a magnetic coupling between a stylus and a host electronic device. A force model 502 is implemented in operational logic of the host electronic device, such as a processor. The force model takes one or more inputs selected from a stylus force 504, a stylus tilt or orientation 506, a stylus motion 508, a stylus location 510, display content 512 and auxiliary content 514. Dependent upon these input signals, the force model 502 determines the drive signals 516 which are supplied to the array of electromagnetic field generators 408. The stylus force 504, stylus tilt or orientation 506 and stylus motion 508 may be sensed by sensors in the stylus and may be communicated to the host electronic device via a wired or wireless communication link. The stylus location 510 may be determined from a stylus locator of the host electronic device. The stylus motion 508 may be derived from a time history of the stylus location 510.

The drive signals 516 may be dependent upon graphical content displayed on a screen of the host electronic device. For example, a force may be generated to indicate the boundary of a displayed object, such as an icon, menu item, or graphical item. In another illustrative example, the stylus tip may be attracted to or repelled from displayed items.

The drive signals 516 may also be dependent upon auxiliary content 514. In an exemplary embodiment, the information may be communicated to the user via the stylus. For example, a stylus vibration may be generated to indicate an event alert.

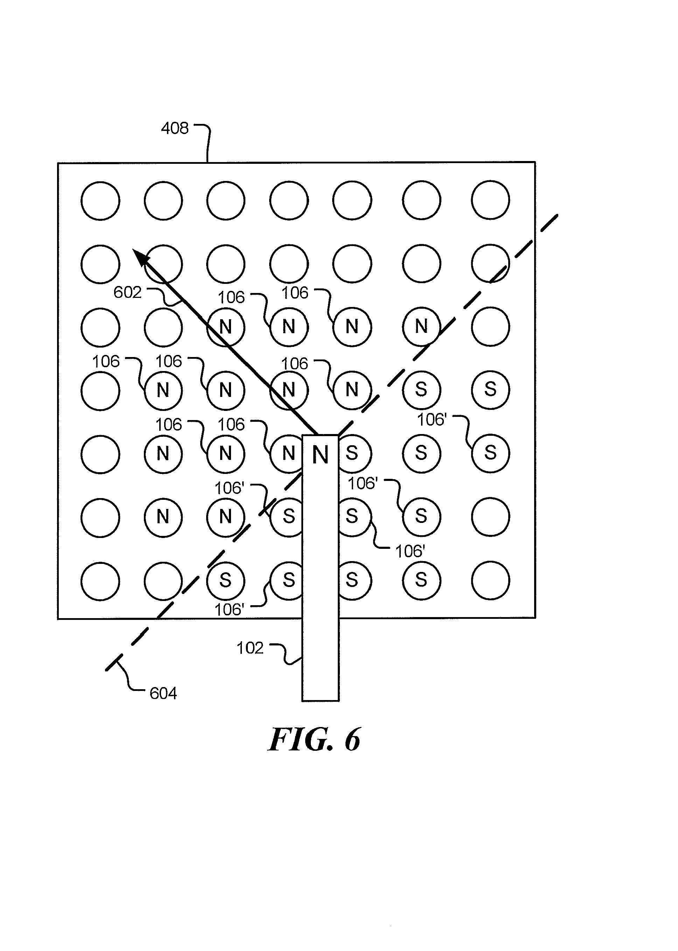

**FIG. 6** is a diagrammatic representation of a stylus 102 moving over an array 408 of magnetic field generators 106, 106'. Arrow 602 indicates the direction of motion of the stylus 102. In this embodiment, the magnetic tip of the stylus 102 has a north magnetic polarity (N), which may be obtained using a permanent magnet or an electromagnet, for example. The broken line 604 indicates a boundary between locations on the array 408 that are ahead of the stylus and locations of the array that are behind the stylus 102 as it moves in the direction 602. To simulate a friction force, magnetic field generators 106 ahead of the stylus are polarized 'north' (N) to repel the magnetic tip of the stylus, while magnetic field generators 106' behind the stylus are polarized 'south' (S) to attract the magnetic tip of the stylus. The boundary 604 moves as the location of the stylus changes, while the angle of the boundary 604 changes as the direction of motion of the stylus changes. The polarities of the magnetic field generators are adjusted dependent upon the position of the boundary 604. In addition, to simulate a friction force, the strength of the magnetic fields may be adjusted dependent upon the speed of the stylus. Thus, the magnetic field generators are controlled dependent upon the location and motion of the stylus 102.

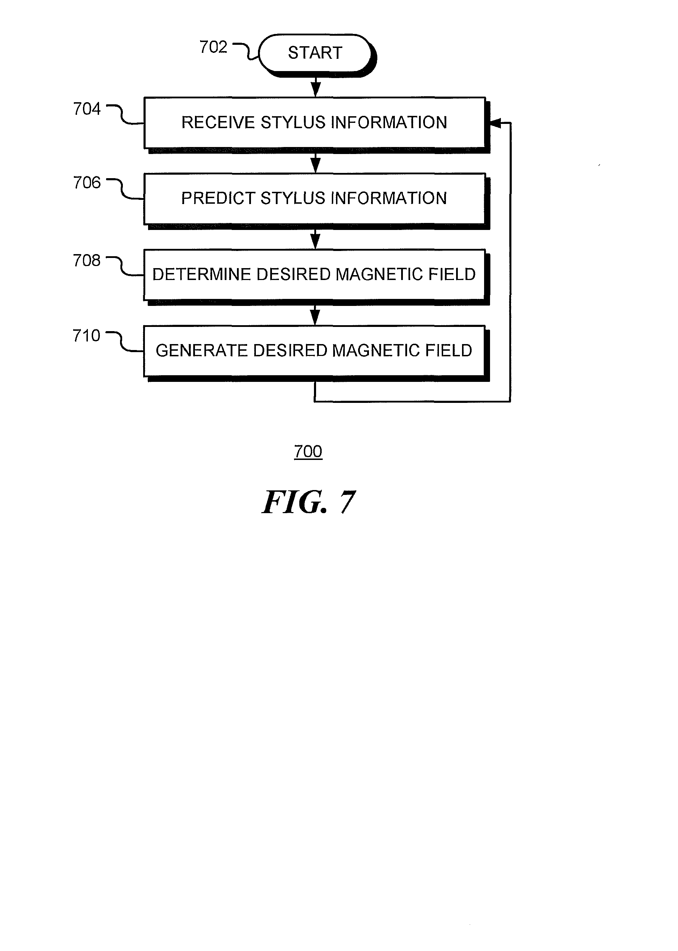

**FIG. 7** is a flow chart 700 of a method for generating a magnetic coupling between a stylus and a host electronic device. Following start block 702, stylus information is received by the host electronic device at block 704. The stylus information may include stylus location, motion, tilt angle, and/or contact force, for example. At block 706, the stylus information at a future time may be predicted to compensate for any time delay from sensing the stylus information to generating a magnetic field. Alternatively, the raw stylus information may be used. At block 708, a desired magnetic field is determined dependent upon the predicted stylus information. The desired magnetic field may depend upon other factors, as discussed above with reference to FIG. 5. At bock 710, the desired magnetic field is generated by controlling the current supplied to an array of magnetic field generators, such as electromagnets. In an illustrative embodiment, all of the magnetic field generators are activated, some with 'North' polarity and some with 'South' polarity. Different magnetic filed generators may have different polarities and different strengths. In a further embodiment, only the magnetic field generators in the vicinity of the stylus tip are activated, since these have the largest effect on the stylus. Flow then returns to block 704 and the process is repeated.

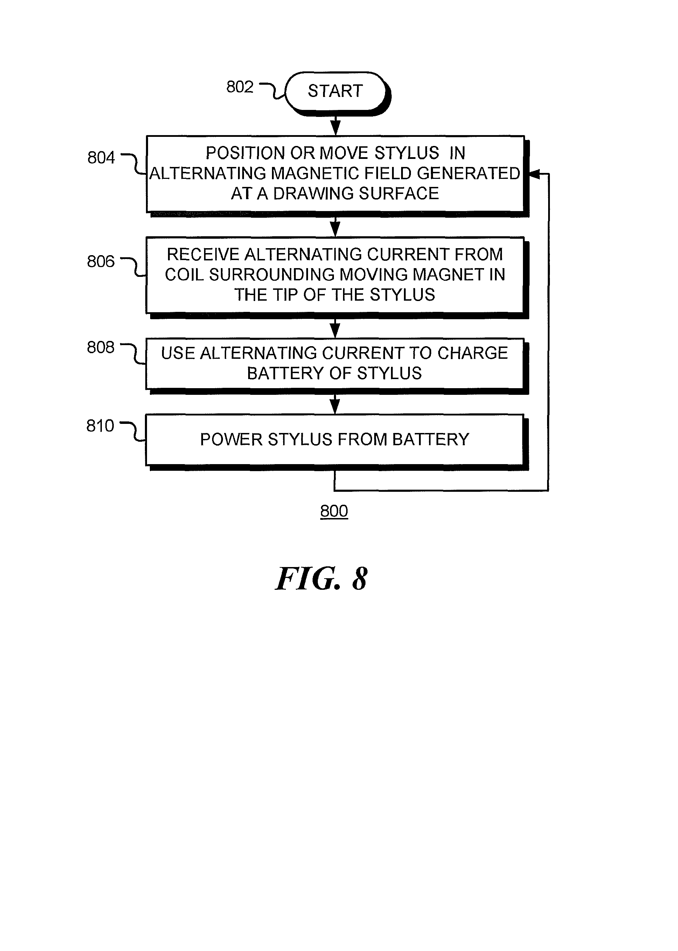

**FIG. 8** is a flow chart 800 of a method for powering a stylus in accordance with some embodiments of the disclosure. Following start block 802, the stylus is positioned or moved in an alternating magnetic field generating at a drawings surface of a host electronic device at block 804. In an exemplary embodiment, an array of magnetic field generators of the host electronic device is arranged in a pattern of spatially alternating polarities. In this embodiment, the magnetic field generators may be permanent magnets or electromagnets, for example. As the stylus moves across the drawing surface, a movable magnet in the tip of the stylus is alternately attracted or repelled. The resulting motion of the movable magnetic induces an electric current in a coil surrounding the movable magnet. In a further embodiment, the polarity of the magnetic field produced by the magnetic field generators of the host electronic device is alternated in time. Again, the movable magnet in the tip of the stylus is alternately attracted or repelled and the resulting motion of the movable magnet induces an electric current in a coil surrounding the movable magnet. At block 806, the induced alternating current is received by a power generation circuit and, at block 808, the alternating current is used to charge a rechargeable battery of the stylus. Alternatively, the alternating current could be rectified and used to charge a capacitor of the stylus. At block 810, the battery (or capacitor) is used to power the stylus. In this way, the life of the battery is extended. Flow then returns to block 804 and the process continues.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device 110 configured to produce a force on a magnetic tip 112 of a stylus 102, the electronic device 110 comprising:
a drawing surface 108;
a plurality of magnetic field generators 106 configured to produce a magnetic field in proximity to the drawing surface 108; and
a processor 402 operable to control the magnetic field produced by the plurality of magnetic field generators 106 in response to a sensed motion of the stylus 102.

2. The electronic device of claim 1, where the drawing surface 108 comprises a display.

3. The electronic device of claim 1, where the processor 402 is responsive to one or more of:
a location 510 of the stylus 102 with respect to the drawing surface 108,
motion 508 of the stylus 102 with respect to the drawing surface 108,
an orientation 506 of the stylus 102 with respect to the drawing surface 108,
and
a contact force 504 between the stylus 102 and the drawing surface 108.

4. The electronic device of claim 1, where the plurality of magnetic field generators 106 comprises an array of electric coils 408.

5. The electronic device of claim 1, where the processor 402 controls the plurality of magnetic field generators 106 to produce a force on the stylus 102 in the plane of the drawing surface 108.

6. The electronic device of claim 1, where the processor 402 controls the plurality of magnetic field generators 106 to produce a force on the stylus 102 perpendicular to the plane of the drawing surface 108.

7. The electronic device of claim 1, further comprising a stylus 102 having a magnetic element 112 located at a tip end of the stylus.

8. A stylus 102 having a tip end for interacting with a drawing surface 108 of a host electronic device 110, the stylus 102 comprising:
a magnetic element 112 located at the tip end of the stylus 102.

9. The stylus of claim 8, where the magnetic element 112 comprises an electromagnet.

10. The stylus of claim 8, where the magnetic element 112 comprises a permanent magnet.

11. The stylus of claim 8, further comprising:
an energy harvester 206 responsive to a magnetic field produced by the host electronic device 110, the energy harvester 206 comprising a magnet 302 movable within an electric coil 300.

12. A method for producing a force on a magnetic tip 112 of a stylus 102, the method comprising:
controlling a plurality of magnetic field generators 106 to produce a magnetic field in proximity to a drawing surface 108 of an electronic device 110 in response to a sensed location of the stylus 102.

13. The method of claim 12, further comprising:
controlling the plurality of magnetic field generators 106 to produce the magnetic field in proximity to the drawing surface 108 in response to a sensed motion 508 of the stylus 102.

14. The method of claim 12, further comprising:
controlling the plurality of magnetic field generators 106 to produce the magnetic field in proximity to the drawing surface 108 in response to a sensed orientation 506 of the stylus 102.

15. The method of claim 12, where the drawing surface 108 is combined with a display screen, the method further comprising:
controlling the plurality of magnetic field generators 106 to produce the magnetic field in proximity to the drawing surface 108 dependent upon a location 510 of the stylus 102 with respect to an image rendered on the display screen.

## Amended claims

### Amended claims in accordance with Rule 137(2) EPC.

**1.** An electronic device 110 configured to produce a force on a magnetic tip 112 of a stylus 102, the electronic device 110 comprising:
a drawing surface 108;
a plurality of magnetic field generators 106 configured to produce a magnetic field in proximity to the drawing surface 108; and
a processor 402 operable to control the magnetic field produced by the plurality of magnetic field generators 106 in response to a sensed motion of the stylus 102 with respect to the drawing surface.

**2.** The electronic device of claim 1, where the drawing surface 108 comprises a display.

**3.** The electronic device of claim 1, where the processor 402 is responsive to one or more of:
a location 510 of the stylus 102 with respect to the drawing surface 108,
an orientation 506 of the stylus 102 with respect to the drawing surface 108, and
a contact force 504 between the stylus 102 and the drawing surface 108.

**4.** The electronic device of claim 1, where the plurality of magnetic field generators 106 comprises an array of electric coils 408.

**5.** The electronic device of claim 1, where the processor 402 controls the plurality of magnetic field generators 106 to produce a force on the stylus 102 in the plane of the drawing surface 108.

**6.** The electronic device of claim 1, where the processor 402 controls the plurality of magnetic field generators 106 to produce a force on the stylus 102 perpendicular to the plane of the drawing surface 108.

**7.** The electronic device of claim 1, further comprising a stylus 102 having a magnetic element 112 located at a tip end of the stylus.

**8.** A stylus 102 for use with an electronic device as claimed in any preceding claims, the stylus having a tip end for interacting with a drawing surface 108 of a host electronic device 110, the stylus 102 comprising:
a magnetic element 112 located at the tip end of the stylus 102.

**9.** The stylus of claim 8, where the magnetic element 112 comprises an electromagnet.

**10.** The stylus of claim 8, where the magnetic element 112 comprises a permanent magnet.

**11.** The stylus of claim 8, further comprising:
an energy harvester 206 responsive to a magnetic field produced by the host electronic device 110, the energy harvester 206 comprising a magnet 302 movable within an electric coil 300.

**12.** A method for producing a force on a magnetic tip 112 of a stylus 102, the method comprising:
controlling a plurality of magnetic field generators 106 to produce a magnetic field in proximity to a drawing surface 108 of an electronic device 110 in response to a sensed motion of the stylus 102 with respect to the drawing surface.

**13.** The method of claim 12, further comprising:
controlling the plurality of magnetic field generators 106 to produce the magnetic field in proximity to the drawing surface 108 in response to the sensed motion 508 of the stylus 102.

**14.** The method of claim 12, further comprising:
controlling the plurality of magnetic field generators 106 to produce the magnetic field in proximity to the drawing surface 108 in response to a sensed orientation 506 of the stylus 102.

**15.** The method of claim 12, where the drawing surface 108 is combined with a display screen, the method further comprising:
controlling the plurality of magnetic field generators 106 to produce the magnetic field in proximity to the drawing surface 108 dependent upon a location 510 of the stylus 102 with respect to an image rendered on the display screen.
